# EUROPEAN PATENT APPLICATION

(11) **EP 1 793 564 A1**
(43) Date of publication of application: **06.06.2007**
(21) Application number: 05447271.7
(22) Date of filing: 30.11.2005
(51) Int. Cl.: H04L 29/12, H04L 12/24, H04L 29/08

(54) **Device and method to detect applications running on a local network for automatically performing the network address translation**

(71) Applicant: Thomson Telecom Belgium, 2650 Edegem (BE)
(72) Inventor: Van der Poel, Dirk, 2650 Edegem (BE); Dumet, Sylvain, 1785 Merchtem (BE)
(74) Representative: Kohrs, Martin

(57) **Abstract**

The present invention concerns an interconnection device (1) comprising a first interface (2) to a first network (10), a second interface (3) to a second network (11), routing means (4) for routing a packet between the first interface (2) and the second interface (3), means for detecting a device (13) connected to the first network (10), the device (13) comprising at least one application, and address translation means (5) for translating a source address of a packet coming from the first network (10) destined to the second network (11) and translating a destination address of a packet coming from the second network (11) destined to the first network (10), according the application running on said local device (13).

The interconnection device comprises application detecting means (7) for detecting an application running on the detected device (13) and configuring the address translation means in response to the detected application.

## Description

The present invention relates to an interconnection device and a method to detect applications running on a local network in order to automatically perform a network address translation configuration.

The number of Internet Protocol (IP) Version 4 addresses being limited; service providers typically give one public IP address to the internet gateway of each of their subscribers. On a local network, the internet gateway typically manages a set of local IP addresses and allocates such local IP addresses to devices located on the local network using Dynamic Host Configuration Protocol (DHCP).
To allow a device located on the local network to communicate on the Internet, the Internet Gateway device translates the device's private IP address into the Internet Gateway's public IP address. This translation is commonly referred to as Network Address and Port Translation (NAPT).
When an application is running on the device located on the local network, the application acting as a server and accepting incoming connections from the Internet, the Internet Gateway needs to be aware of the fact that the incoming connection from the Internet is not destined to itself, but for the device.
Users wanting to use such applications (examples are a Web server, a computer game server or peer-to-peer programs) need to configure the Internet Gateway so that it knows which incoming connections from the Internet to forward to which device (and translate the IP addresses accordingly). Prior art Internet Gateways provide a way in which an end-user can configure which applications (typically based upon UDP or TCP port numbers) are assigned to which local network device. The manual configuration of NAPT rules may be cumbersome and confusing to end-users. The technical background is complex and difficult to explain. In most cases, the user tries the applications and may be faced with some applications not working as expected.

The present invention concerns a device and a method for detecting applications running devices located on a local network and for automatically performing the network address translation configuration.

To this end, the invention relates to an interconnection device that comprises:
- a first interface to a first network,
- a second interface to a second network,
- routing means for routing a packet between the first interface and the second interface,
- means for detecting a local device connected to the first network, the local device comprising at least one application,
- address translation means for translating a source address of a packet coming from the first network destined to the second network and translating a destination address of a packet coming from the second network destined to the first network, according to the application running on the local device.

According to the invention, the interconnection device comprises application detecting means for detecting an application running on the local device, and for configuring the address translation means in response to the detected application.
Surprisingly, the application detecting means automatically updates the address translation means in response to the detected application without the participation of a user. The translation is then performed according to the new detected application.

In a preferred embodiment, the application detecting means of the interconnection device identify an active port among ports of the local device, the ports being selected at least among transmission control protocol ports or user datagram protocol ports.
In the case of TCP/IP networks, the application types match to the UDP or TCP port of a device. The application detecting means take advantage of this to detect the active ports that notify that an application is running. A non active port means that no application is running on it.

According to an embodiment of the invention, when the application detecting means detect, on a local device, an application that has not been detected on another local device, the application detecting means configure the address translation means in response to the detected application.
When the interconnection device detects an application that has already been detected on another local device, the application detecting means do not configure the address translation means. The first detected application only is considered.

According to an embodiment of the invention, the interconnection device comprises a user interface allowing a user to access among others a list of the detected applications running on the local device, and to configure the address translation means.

Preferably the user interface allows a user to enable or disable the application detecting means.

Advantageously the user interface is accessible at least through a graphical user interface, or by remote management means.
This permits to manage the device locally or remotely.

According to an embodiment of the invention, the interconnection device comprises means for setting a list of reference applications, the application detecting means detecting application being among the list.

This permits to limit the set of applications that are handled by the application detecting means.

Advantageously, the user interface permits to monitor the list. This allows the control of the list locally or remotely.

The invention also relates to a method for configuring an interfacing device comprising a first interface to a first network and a second interface to a second network, routing means, address translation means for translating a source address of a packet coming from the first network destined to the second network and translating a destination address of a packet coming from the second network destined to the first network, according to the application running on the local device, comprising following steps at the device of detecting a device connected to the first network.
According to the invention, the method comprises detecting an application running on the local device, and configuring the address translation means in response to the detected application.

Preferably, the step of detecting applications is performed through the identification of an active port among ports of the local device, the ports being selected at least among transmission control protocol ports or user datagram protocol ports.

According to an embodiment, configuring the address translation means in response to the detected application is performed when the application detecting means detect on a local device an application that has not been detected on another local device.

The invention also relates to an address translation module comprising means for detecting a device connected to a first network, the device comprising at least one application, and means for translating a source address of a packet coming from the first network destined to a second network and translating a destination address of a packet coming from the second network destined to the first network, according to an application running on the device. According to the invention, the module comprises application detecting means for detecting an application running on the local device, and configuring the address translation means in response to the detected application.
The module might be for example an integrated circuit that is comprised into a device such as the interconnecting device.

The invention will be better understood and illustrated by means of the following embodiment and execution examples, in no way restrictive, with reference to the appended figures among which:
- Figure 1 is a block diagram of an interconnection device compliant with the invention;
- Figure 2 is a flow chart showing the detection process;
- Figure 3 is a flow chart showing the translation of the IP addresses.

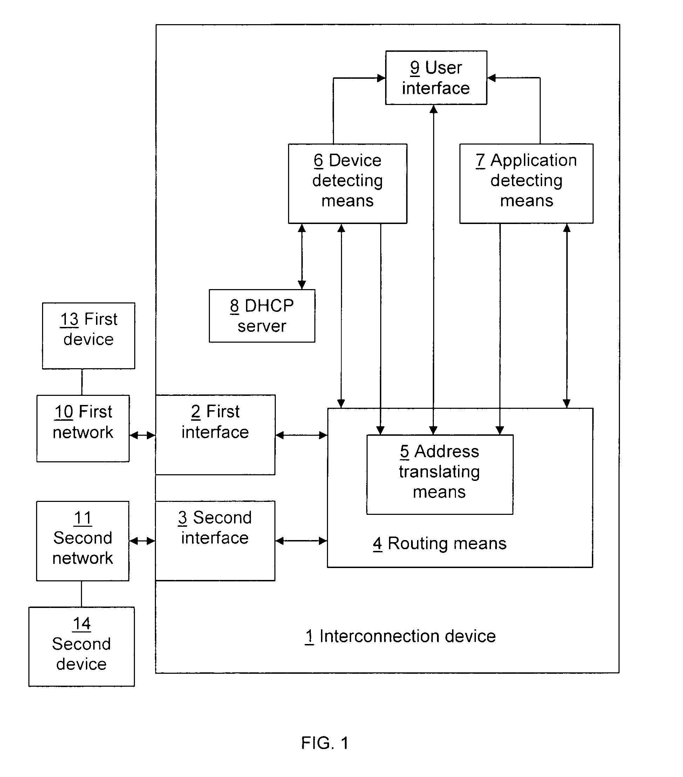

In figure 1, the represented blocks are purely functional entities, which do not necessarily correspond to physically separate entities. Namely, they could be developed in the form of software, or be implemented in one or several integrated circuits.

The exemplary embodiment comes within the framework of a transmission on a TCP/IP network, but the invention is not limited to this particular environment and may be applied within other types of networks.

Figure 1 describes the interconnection device according to the present embodiment. The interconnection device could be for example a modem such as for example a DSL modem (for "Digital Subscriber Line") or a residential gateway that connects a residential network to the public Internet network. The interconnection device 1 comprises two network interfaces, a first interface 2 and a second interface 3, which respectively connect the interconnection device 1 to the first network 10 and to the second network 11. The first network is also referred as the local network hereafter.
The interconnection device 1 comprises routing means 4 for routing packets between the first network, the second network and the device itself. The routing means apply rules as defined by the address translating means 5, which are based on a network translation address protocol.
The interconnection device also comprises a DHCP server 8 for providing IP addresses to the devices, acting as DHCP clients, on the local network.

The interconnection device comprises means for identifying apparatus on the first network 10. It comprises device detecting means 6 for identifying a device 13 connected to the first network. It comprises application detecting means 7 for detecting applications running on each detected device.
The interconnection device also comprises a user interface 9.

The address translating means conform, in the present embodiment, to the Network Address Port Translation, noted NAPT, as defined in the RFC 3022. NAPT is a method by which network addresses and their TCP/UDP (Transmission Control Protocol/User Datagram Protocol) ports are translated into a single network address and its TCP/UDP ports. This permits to connect an area with private addresses to an area with globally unique registered addresses.

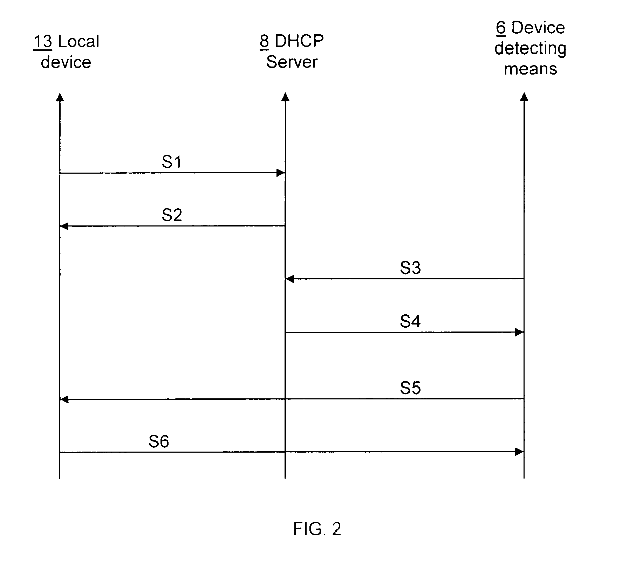

A mechanism to detect applications is now described, as illustrated in figure 2:
First, when a device is connected to the first network, it typically requests an IP address from the DHCP server contained in the interconnection device (S1). The DHCP server provides an IP address and keeps a track of the new device (S2).
The device detecting means of the interconnection device uses DHCP server information to identify the new device that is present on the first network. It checks new entries on the DHCP server (S3 & S4)
An alternative for the device detecting means to detect the running devices on the first network (e.g. devices with a static IP address) is to look in the Address Resolution Protocol (ARP) table of the interconnection device. The devices that are already connected to the first network are indicated in the ARP table.

Then the interconnection device checks the applications that are running on the detected device. This is performed in an active process where the interconnection device queries the detected device whether such or such application is running (S5 & S6). According to an embodiment, the application detecting means check the ports of the detected device that are reachable; a port corresponds to a precise application.

In case of TCP, the interconnection device sends a TCP packet with the SYN flag set to one to each port of the device. The SYN, which corresponds to 'synchronize', is usually used in TCP to request the opening of a connection. The Interconnection device acts as a client that would try to initiate an active opening of a connection with a server on the device, consisting in initiating a connection to the device on a given TCP port number.
If there is an application listening on that port, the device responds with a TCP packet with both the SYN and ACK flags set to one.
If there is no application on that port, the device sends an ICMP (Internet Control Message Protocol) Destination unreachable message with the "Code" set to "port unreachable".

In case of UDP, the message sent to the port on the device is a UDP datagram with either empty payload or meaningless payload.
If there is no application running on that port, the device sends an ICMP (Internet Control Message Protocol) Destination Unreachable message with the "Code" set to "port unreachable".
If there is an application on that port, the device may or may not respond with a message.
The fact that no ICMP Destination Unreachable message is sent indicates there is an application on that port.

The interconnection device holds a list of local devices, together with the applications running on each device. This permits the interconnection device to have a map of the applications running on the first network. Only one application per type of application may be referenced at a time by the network address translation; only one WEB server on the first network may be accessible by a client from the second network using the WEB server port.
The table below is an illustration of such a map that comprises following entries: the devices detected on the first network, the applications running on each detected device and the applications taken into account by the interconnection device. In the example, four local devices have been detected, with applications running on them. The applications taken into account are all different on each device. Even the laptop 1 and desktop 1 comprise a FTP and WEB server. The FTP server running on the laptop 1 and the WEB server running on the desktop 1 are taken into account for the translation.

| **Local Devices** | **Applications running on the device** | **Applications taken into account for the translation** |
|---|---|---|
| Laptop 1 | FTP server | FTP server |
| | WEB server | |
| Laptop 2 | IRC | No application |
| Desktop 1 | WEB server | WEB server |
| | FTP server | |
| Desktop 2 | Telnet | Telnet |
| | IRC | IRC |

The interconnection device comprises and applies some rules to select a single application among several applications of the same type on several devices of the local network. The rules of selecting an application among several applications of the same type are as follows:
- Rule1: an application on a single predefined device only. For example a WEB server running on desktop 1 is taken into account, but not on any other device on the first network.
- Rule2: an application on all devices of a given type only. The device may be a desktop, and a WEB server is taken into account if running on a desktop, but not on a laptop.
- Rule3: consider an application on all devices. A WEB server may be taken into account on all devices of the local network, desktops, laptops, etc...

The application detecting means performs the detection process according to the rule that has been set. If Rule1 is set, detection of the application takes place on the specified device only.
If Rule2 or Rule3 are set, several devices may run the same application. A selection is necessary to define which application is to be taken into account by the network address translation. If several WEB servers run in the home network, only one of them may be accessible from the second network. The detection of the application is carried out as follows:
- The device where the application has been first identified is the one that is considered. If the same application is identified later on another device, it is not considered. In another embodiment, an indication appears on the user interface to indicate that the application has been detected but not considered. A local user or the remote management may then access the address translating means through the user interface and modify the translation rules to select the application of a certain type instead of the one initially chosen.
- Alternatively, a device has a higher priority than the other devices. When an application is detected on this device, the application is considered on this device, and no longer on a previous one. For example, in a family, the desktop used by the parents might have a higher priority than the desktop used by the children. And the WEB server running on the parent desktop is taken into account, not the one running on the children desktop.

After the detection of an application that is relevant, the application detecting means updates the network address translation with the port corresponding to the application and the device identification. The device identification may be the MAC address or the local IP address. If the detected application is a HTTP server, the indicated port is the TCP port number 80.
Below is an example of a network address translation.

| **Local Devices** | **Local address** | **Applications and related port number** |
|---|---|---|
| Laptop 1 | 192.168.10.2 | FTP (21/TCP) |
| Laptop 2 | 192.168.10.3 | No application |
| Desktop 1 | 192.168.10.4 | HTTP (80/TCP) |
| Desktop 2 | 192.168.10.5 | Telnet (23/TCP) |
| | | IRC (194/TCP) |

When the device detecting means detects that the device changes its IP address, it also updates the port mapping.

When a device is powered off, the port map remains unchanged in the address translating means.

When a device is removed from the local network, the port map is modified. The entries corresponding to the device are removed. A device is considered as removed from the local network when it has not been discovered for a given amount of time or it has been manually deleted by the user via the user interface. The amount of time may correspond to a maximum value, the 'undiscoverlimit'. It may be set for example to the default value of "one week". It may also be configurable by the user.

In another embodiment, the application detecting means of the interconnection device does not check all the applications that are running on the devices of the local network. It only checks the applications among a restricted set of applications.
The set of application and devices have been indicated in a restricted list of reference applications and reference devices.
This list comprises among other the following entries:
- A list of application that should be checked. For example TCP/HTTP or TCP/FTP.
- A list of devices that should be checked for such applications. For example desktop and laptops.
- In case of several devices, possibly a priority level between devices.
- A list of application that should be checked for such device. For example HTTP for all desktops and laptops, FTP for desktops only.
- A status of the applications, whether it has been detected or not, and whether it has been selected for the network address translation or not.

The list is accessible through the user interface. The user interface may be accessible by a user through a graphical user interface, or by a service provider through remote management.
The list may be modified by remote management means or locally by a user. There may be means for resetting the list, and for coming back to default values. An example of default values may be: consider all devices of the local network, and the HTTP (80/TCP), FTP (21/TCP) applications.

The list is part of the interconnection device configuration that is stored in a file that is present in the interconnection device persistent memory. On startup of the interconnection device, the file is loaded so that all modules of the device have their configuration.

The interconnection device may be configured so that the manual mode is used and the automatic mode is not used. The automatic configuration of the network address translation may be enabled or disabled through the user interface. When the automatic mode is disabled, the manual mode is then the only way to configure the network address translation. When the automatic mode is enabled, the manual mode can still be used to change and/or overrule the automatic NAPT rules created.

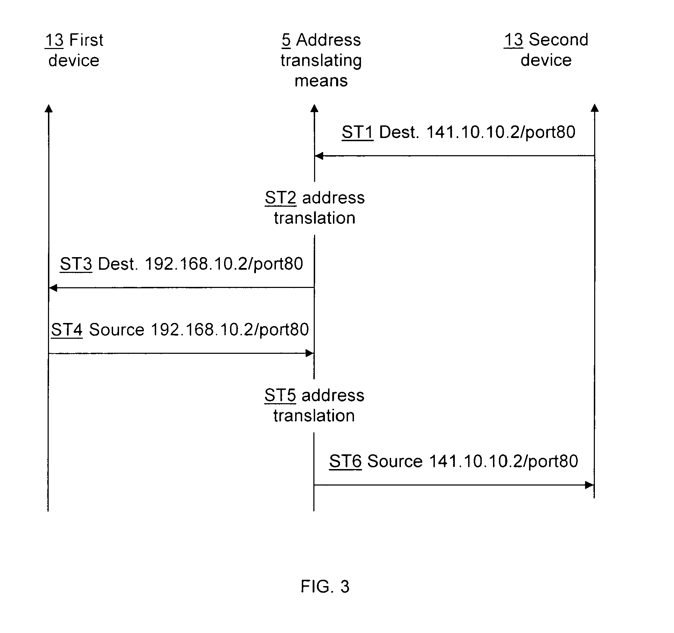

Figure 3 is an example of the address translation mechanism. The interconnection device receives an IP packet, which is an HTTP request from the second device (ST1). The destination address 141.10.10.2/port80 is the IP address of the interconnection device. It checks with the address translation means whether a device on the local network runs an HTTP server application (ST2); i.e. it checks whether the map comprises a local device with an application such as an HTTP server. As the first device (13) runs an HTTP application, it routes the request to this device, with a new destination address - 192.168.10.2/port80 - which is the local address of the first device (ST3). The first device then sends a response to the second device (ST4). The interconnection device translates the source address of the first device with its source address (ST5), and sends the response to the second device (ST6).

## Claims

1. Interconnection device (1) comprising:
- a first interface (2) to a first network (10),
- a second interface (3) to a second network (11),
- routing means (4) for routing a packet between said first interface (2) and said second interface (3),
- means for detecting a local device (13) connected to said first network (10), said local device (13) comprising at least one application,
- address translation means (5) for translating a source address of a packet coming from said first network (10) destined to said second network (11) and translating a destination address of a packet coming from said second network (11) destined to said first network (10), according to the application running on said local device (13),
**characterized in that** it comprises application detecting means (7) for detecting an application running on said local device (13), and configuring said address translation means in response to the detected application.

2. Interconnection device (1) according to the preceding claim, **characterized in that** said application detecting means (7) identify an active port among ports of said local device (13), said ports being selected at least among transmission control protocol ports or user datagram protocol ports.

3. Interconnection device (1) according to the preceding claim, **characterized in that** when said application detecting means (7) detect, on a local device, an application that has not been detected on another local device, said application detecting means (7) configure said address translation means in response to the detected application.

4. Interconnection device (1) according to the preceding claim, **characterized in that** it comprises a user interface (9) allowing a user to access among others a list of said detected applications running on the local device, and to configure said address translation means.

5. Interconnection device (1) according to the preceding claim, **characterized in that** said user interface (9) allows a user to enable or disable the application detecting means (7).

6. Interconnection device (1) according to any of the claims 4 to 6, **characterized in that** said user interface (9) is accessible at least through a graphical user interface, or by remote management means.

7. Interconnection device (1) according to any of the preceding claims, **characterized in that** it comprises means for setting a list of reference applications, said application detecting means detecting application being among said list.

8. Interconnection device (1) according to the preceding claim, **characterized in that** said user interface (9) permits to monitor said list of reference.

9. Method for configuring an interconnection device (1) comprising a first interface (2) to a first network (10) and a second interface (3) to a second network (11), routing means (4), address translation means (5) for translating a source address of a packet coming from said first network (10) destined to said second network (11) and translating a destination address of a packet coming from said second network (11) destined to said first network (10), according to the application running on said local device (13), comprising following steps at the device of detecting a local device (13) connected to said first network (10), **characterized in that** it comprises the steps of:
- detecting an application running on said local device (13),
- configuring said address translation means in response to the detected application.

10. Method according to the preceding claim, **characterized in that** the step of detecting an application is performed through the identification of an active port among ports of said local device (13), said ports being selected at least among transmission control protocol ports or user datagram protocol ports.

11. Method according to the preceding claim, **characterized in that** the step of configuring the address translation means in response to the detected application is performed when said application detecting means detect on a local device an application that has not been detected on another local device.

12. Address translation module comprising
- means for detecting a device (13) connected to a first network (10), said device (13) comprising at least one application, and
- means for translating a source address of a packet coming from said first network (10) destined to a second network (11) and translating a destination address of a packet coming from the second network (11) destined to the first network (10), according to an application running on said device (13),
**characterized in that** it comprises application detecting means (7) for detecting an application running on said local device (13), and configuring said address translation means in response to the detected application.
